# EUROPÄISCHE PATENTANMELDUNG

(11) **EP 2 767 725 A1**
(43) Veröffentlichungstag der Anmeldung: **20.08.2014**
(21) Anmeldenummer: 14167148.7
(22) Anmeldetag: 18.01.2007
(51) Int. Cl.: F16D 55/00

(54) **Verschleißblech zum Einsetzen in den Belagschacht einer Scheibenbremse**

(30) Priorität: 18.01.2006 DE 102006002569
(62) Teilanmeldung aus: 07718281.4
(71) Anmelder: BPW Bergische Achsen KG, 51674 Wiehl (DE)
(72) Erfinder: Günter, Dowe, 51588 Nümbrecht (DE); Klaas, Thomas, 51590 Reichshof (DE); Pehle, Michael, 51371 Leverkusen (DE); Janzen, Hartmut, 51674 Wiehl (DE); Schumacher, Torsten, 51588 Nümbrecht (DE); Lang, Karl-Rainer, 51588 Nümbrecht (DE)
(74) Vertreter: Bungartz Christophersen Partnerschaft mbB Patentanwälte

(57) **Zusammenfassung**

Vorgeschlagen wird ein Verschleißblech (40) zum austauschbaren Einsetzen in einen Belagschacht eines zur Befestigung eines Bremssattels dienenden Bremsträgers einer Scheibenbremse. In einer ersten Ausführungsform besteht das Verschleißblech (40) aus an einem zentralen Stegblech (41) und zwei hierzu im Wesentlichen rechtwinklig angeordneten Schenkelblechen (42) ausgebildeten, glattflächigen Innenflächen, welche reibungsarme tangentiale (12) und radiale (11) Abstütz- und Führungsflächen für einen in den Belagschacht einsetzbaren Bremspad der Scheibenbremse bereitstellen. In einer zweiten Ausführungsform besteht das Verschleißblech (40) aus zwei einzelnen Verschleißblechen (40a) mit jeweils an einem Stegblech (41) und einem hierzu im Wesentlichen rechtwinklig angeordneten Schenkelblech (42) ausgebildeten, glattflächigen Innenflächen, die reibungsarme tangentiale (12) und radiale (11) Abstütz- und Führungsflächen für einen in den Belagschacht einsetzbaren Bremspad der Scheibenbremse bereitstellen. An dem Stegblech (41) und an dem Schenkelblech (42) sind Mittel (43) zum Fixieren des jeweiligen Verschleißblechs (40a) an dem Belagschacht angeformt. Die Mittel (43) weisen die Gestalt von sich bis über Flachseiten (25, 26) des Bremsträgers erstreckenden Abkantungen (43) auf. Durch Verwendung der Verschleißbleche (40, 40a) ist im Falle des sich mit der Zeit einstellenden Verschleißes der Führungsflächen des Belagschachts nicht notwendig, den kompletten Bremsträger, an dem der Belagschacht ausgebildet ist, zu tauschen. Es reicht aus, die Verschleißbleche (40,40a) auszutauschen.

## Beschreibung

Die Erfindung betrifft ein Verschleißblech zum Einsetzen in den Belagschacht eines zur Befestigung eines Bremssattels dienenden Bremsträgers einer Scheibenbremse.

Aus der DE 40 36 272 A1 oder der DE 198 57 074 A1 sind Scheibenbremsen in der Bauart einer Gleitsattel-Scheibenbremse bekannt, bei denen sich der Bremsträger, welcher den Bremssattel mit dem Achskörper verbindet, aus zwei getrennten, zu beiden Seiten der Bremsscheibe angeordneten Bremsträgerteilen zusammensetzt, die lösbar miteinander verbunden sind. Nur eines der beiden Bremsträgerteile ist mit dem Achskörper verschweißt. Die Montage dieser Scheibenbremse an einem Achskörper erfolgt in zwei aufeinander folgenden Schritten. In einem ersten Schritt wird an dem ersten, direkt an den Achskörper angeschweißten Bremsträgerteil das zweite Bremsträgerteil angeschraubt. In einem zweiten Schritt wird sodann der Bremssattel aufgesetzt, und mit dem ersten Bremsträgerteil verschraubt.

Die Bremspads der Scheibenbremse befinden sich in Belagschächten der beiden Bremsträgerteile, und sind an Führungsflächen abgestützt, die unmittelbar an den Belagschächten ausgebildet sind. Hierzu sind die Abstütz- und Führungsflächen des Belagschachts in geeigneter Weise vorbereitet, z. B. durch spanende Bearbeitung.

Mit der Zeit kommt es bei solchen Scheibenbremsen zu einem Verschleiß an den Abstützund Führungsblechen der Belagschächte. In einem solchen Fall muss der komplette Bremsträger, an dem der Belagschacht ausgebildet ist, getauscht werden. Hingegen wäre z. B. ein bloßes Überschleifen der Flächen nicht möglich, da damit Änderungen an den für den Bremsbetrieb wichtigen Toleranzen des Belagschachts verbunden wären.

Daher ist es Aufgabe der Erfindung zu verhindern, dass es im Laufe der Zeit zu einer Situation kommt, in der wegen des Verschleißes der Abstütz- und Führungsflächen des Belagschachts der komplette Bremsträger, an dem der Belagschacht ausgebildet ist, getauscht werden muss.

Zur Lösung dieser Aufgabe wird in einer ersten Ausgestaltung ein Verschleißblech zum austauschbaren Einsetzen in einen Belagschacht mit den Merkmalen des Anspruchs 1, und in einer zweiten Ausgestaltung ein Verschleißblech zum austauschbaren Einsetzen in einen Belagschacht mit den Merkmalen des Anspruchs 2 vorgeschlagen.

Der Vorteil dieser Verschleißbleche besteht darin, dass im Falle des sich mit der Zeit einstellenden Verschleißes an den Abstütz- und Führungsflächen des Belagschachts nicht der komplette Bremsträger, an dem der Belagschacht ausgebildet ist, getauscht werden muss. Vielmehr reicht es aus, die Verschleißbleche auszutauschen. Dies kann im Rahmen der regelmäßigen Wartungsarbeiten an der Scheibenbremse erfolgen, z. B. bei jedem dritten Wechsel der Bremspads.

Bei einer Scheibenbremse, welche in der üblichen Weise zwei Bremsbeläge, d. h. Bremspads aufweist, ist der eine Bremspad in einem Belagschacht angeordnet, welcher Bestandteil des den Bremssattel mit dem Achskörper verbindenden Bremsträgers ist, wohingegen der weitere oder jeder weitere Bremsbelag, d.h. Bremspad nicht an dem Bremsträger oder einem Teil des Bremsträgers angeordnet ist, sondern sich in einer Aufnahme des Bremssattels befindet. Zu diesem Zweck kann der Bremssattel mit einem Belagschacht mit daran angeordneten Führungsflächen zur radialen und tangentialen Führung des weiteren Bremspads versehen sein.

Die im Folgenden beschriebene Scheibenbremse lässt sich in wenigen Schritten montieren. Der Bremsträger wird direkt an dem Achskörper befestigt, vorzugsweise durch die für solche Verbindungen übliche Schweißverbindung. Danach muss nur noch der Bremssattel an den Bremsträger angesetzt und mit diesem verbunden werden. Weitere Montageschritte wie zum Beispiel die Montage weiterer Bremsträgerteile sind nicht erforderlich. Die Scheibenbremse kommt daher mit einer geringen Teileanzahl aus.

Bevorzugte Ausgestaltungen und Ausführungsbeispiele sind in den Unteransprüchen definiert.

Desweiteren werden einige Ausführungsbeispiele nachfolgend anhand der zugehörigen Zeichnungen erläutert. Darin zeigen:
- Fig. 1: In einer perspektivischen Darstellung den Achskörper einer nicht angetriebenen Fahrzeugachse mit daran angeschweißten Bremsträgern;
- Fig. 2: Eine Draufsicht auf das eine Ende des Achskörpers entsprechend dem Ansichtspfeil II in Fig. 1;
- Fig. 3: Eine Schnittdarstellung entsprechend der in Fig. 1 markierten Schnittebene III-III;
- Fig. 4: Eine gegenüber Fig. 3 geänderte Ausführungsform unter Verwendung eines zweiteiligen Bremsträgers;
- Fig. 5: Einen Bremsträger in einer weiteren Ausführungsform, hier jedoch ohne Darstellung des Achskörpers der Fahrzeugachse;
- Fig. 6: Einen Schnitt durch den Bremsträger sowie eine darin eingesetzte Gewindebuchse entsprechend der in Fig. 5 markierten Schnittebene VI-VI;
- Fig. 7: Einen Schnitt durch den Bremsträger und eine darin eingesetzte Gewindebuchse entsprechend der in Fig. 5 markierten Schnittebene VII-VII;
- Fig. 8: In einer weiteren Ausführungsvariante einen Schnitt durch einen Bremsträger und ein darin eingeschraubtes Aufnahmeelement für einen Bremssattel;
- Fig. 9a: Eine stark vereinfachte Teilansicht des Bremsträgers mit dem daran befestigten Bremssattel der Scheibenbremse;
- Fig. 9b: Die Gegenstände nach Fig. 9a während der Demontage des Bremssattels von dem Bremsträger;
- Fig. 9c: Die Gegenstände nach den Fign. 9a und 9b nach abgeschlossener Demontage des Bremssattels von dem Bremsträger;
- Fig. 10: Eine Explosionsdarstellung der in Fig. 9a mit X zusammengefassten Gegenstände zwecks Erläuterung der Demontierbarkeit des Bremssattels;
- Fig. 11: In perspektivischer, vergrößerter Darstellung ein Verschleißblech zum Einsetzen in einen Belagschacht des Bremsträgers und
- Fig. 12: Eine weitere Ausführungsform von Verschleißblechen zum Einsetzen in einen Belagschacht des Bremsträgers.

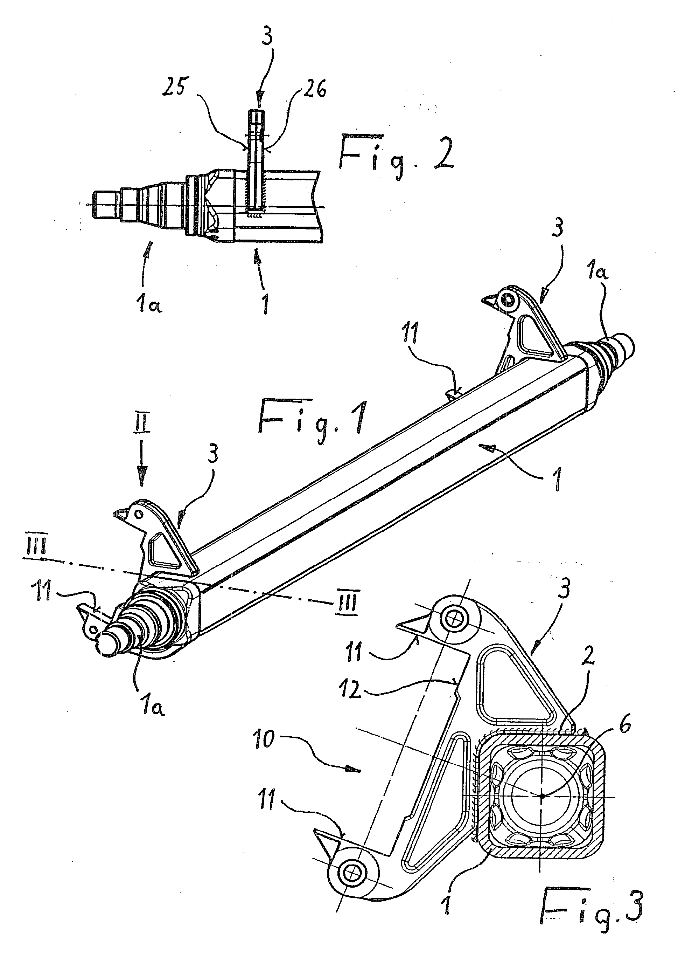

In Fig. 1 ist in perspektivischer Gesamtdarstellung eine Fahrzeugachse dargestellt. Diese findet Verwendung vor allem als nicht-angetriebene Achse für Schwerlastfahrzeuge, z.B. für Lkw-Anhänger. Nahe den beiden Enden eines langgestreckten Achskörpers 1, der aus einem Achsrohr mit quadratischem, an den Kanten abgerundetem Querschnitt und zwei Achsschenkeln 1a besteht, sind Bremsträger 3 angeschweißt. Die Bremsträger 3 bilden gemeinsam mit einem in Fig. 1 nicht dargestellten Bremssattel sowie einer ebenfalls nicht dargestellten Bremsscheibe eine Scheibenbremse. Die Achsschenkel 1a des Achskörpers nehmen die Wälzlagerungen für die Nabe sowie die Bremsscheibe des jeweiligen Fahrzeugrades auf.

Anhand der Fig. 3 werden nun Einzelheiten des Bremsträgers 3 sowie dessen Anordnung an dem Achskörper 1 beschrieben. Die Verbindung erfolgt beim Ausführungsbeispiel durch Verschweißen des Bremsträgers 3 mit dem hier quadratisch gestalteten Achsrohr des Achskörpers 1 entlang der Schweißnaht 2. Die Schweißnaht 2 erstreckt sich entlang eines ersten, horizontalen Schweißnahtabschnittes sowie eines hierzu rechtwinkligen, zweiten Schweißnahtabschnittes. Dargestellt ist insoweit eine durchgehende Schweißverbindung. Zur Vermeidung von Spannungsspitzen kann es jedoch von Vorteil sein, die Verschweißung im Bereich der Rundung des Achsrohrs abzusetzen, d.h. im Fall der Fig. 3 zwei getrennte Schweißnähte 2 zu ziehen. Auf der anderen Seite des sich quer zum Achskörper 1 erstreckenden Bremsträgers 3 befindet sich eine entsprechende gestaltete Schweißnaht bzw. entsprechende Schweißnähte.

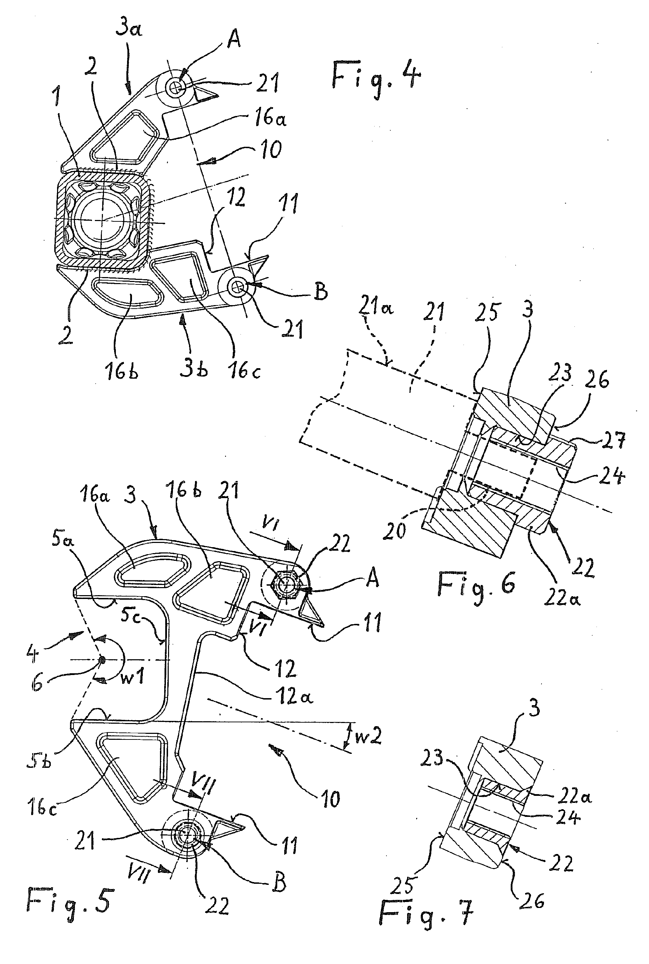

Eine Alternative zeigt Fig. 4. Denn während der Bremsträger bei Fig. 3 einstückig ist, zeigt Fig. 4 zwei getrennte, aber in derselben Ebene quer zum Achskörper angeordnete Bremsträgerteile 3a, 3b. Das eine Bremsträgerteil 3a ist mit einer Seite des Achskörpers 1 verschweißt, das andere Bremsträgerteil 3b vor allem mit der dazu abgewandten Seite.

Zur Gewichtseinsparung ist der Bremsträger 3 bzw. sind die Bremsträgerteile 3a, 3b mit Ausnehmungen 16a, 16b, 16c auf einer oder auf beiden Flachseiten versehen. Anstelle der Ausnehmungen können sich dort auch, soweit die Materialstabilität des Bremsträgers dies zulässt, Öffnungen befinden.

In Fig. 5 ist eine weitere Variante eines erfindungsgemäßen Bremsträgers 3 dargestellt, hier jedoch ohne das Achsrohr. Zu erkennen ist, dass die Öffnung 4, mit der der Bremsträger 3 auf den Achskörper aufgesetzt ist, maulförmig oder U-förmig gestaltet ist, so dass an der Öffnung 4 insgesamt drei Flächen 5a, 5b, 5c für die Schweißverbindung mit dem Achskörper zur Verfügung stehen. Infolge der maulförmigen Gestaltung der Öffnung 4 ergibt sich ein großer Umschließungswinkel w1 in Bezug auf die Mittelachse 6 des Achskörpers. Der Umschließungswinkel w1 beträgt aus Gründen der Gewichtseinsparung weniger als 300°, und bei dem Ausführungsbeispiel nach Fig. 5 nur ca. 270°. Aber selbst dieser Umschließungswinkel lässt es noch zu, den Bremsträger 3 zwecks anschließender Verbindung mit dem Achskörper 1 von der Seite her auf den hier quadratischen Achskörper aufzusetzen, was die Herstellung der Einheit aus Achskörper und Bremsträgern bei der Schweißmontage vereinfacht. Alternativ ist - allerdings unter Verlust des Gewichtsvorteils - auch eine vollständige Umschließung des Achskörpers möglich.

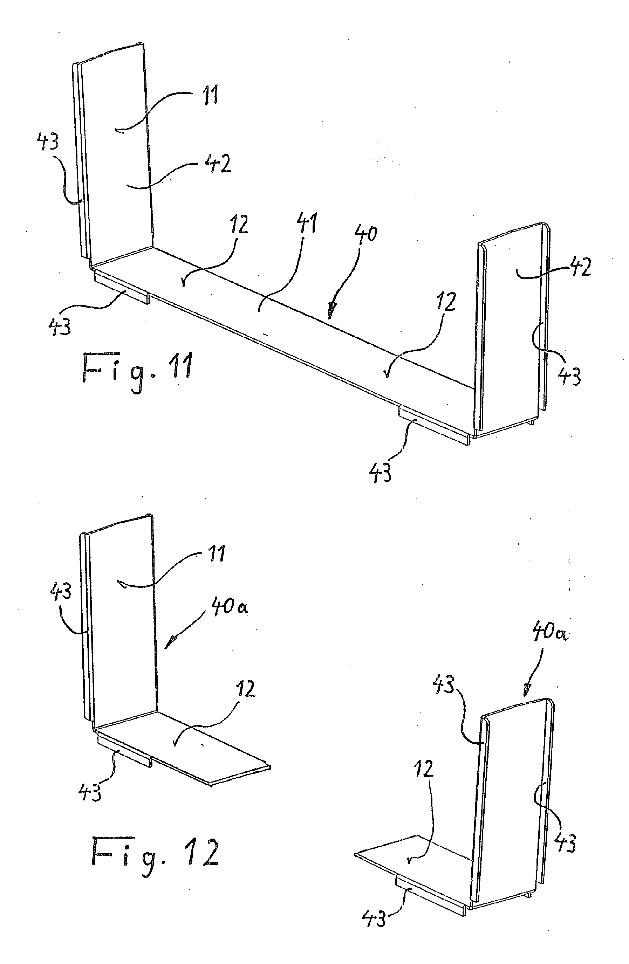

An dem Bremsträger 3 ist einstückig ein Belagschacht 10 für einen Bremsbelag der Scheibenbremse ausgebildet. Der Belagschacht 10 ist von rechteckigem Querschnitt und ist nach Art eines Mauls nach außen hin offen, so dass sich der Bremspad von außen her in den Schacht 10 einsetzen lässt. Um den Bremspad beim Bremsen in dem Belagschacht 10 abzustützen und in Achsrichtung beweglich zu führen, befinden sich an den Innenflächen des Belagschachts 10 entsprechende Führungsflächen. Diese können, wie bei Fig. 5, unmittelbar an dem Bremsträger 3 angeformt sein, wobei die Oberflächen gehärtet sein sollten. Oder aber die Führungsflächen können sich an separaten, austauschbaren Einsätzen oder an Verschleißblechen befinden, die ihrerseits zunächst in oder an dem Belagschacht fixiert werden. Geeignete Verschleißbleche werden nachfolgend anhand der Fign. 11 und 12 erläutert werden.

Die Führungsflächen setzen sich aus radialen und tangentialen Führungsflächen 11, 12 für den Bremspad zusammen. Die zwei radialen Führungsflächen 11 des Belagschachts 10 verlaufen parallel zueinander, und tangentiale Führungsflächen 12 erstrecken sich rechtwinklig zu den radialen Führungsflächen 11. In diesem Zusammenhang ist der Begriff der "radialen" Führungsfläche nicht streng geometrisch zu verstehen. Gemeint sind vielmehr jene Führungsflächen 11, an denen sich der Bremspad beim Bremsvorgang in Umfangsrichtung abstützt und an denen daher in erster Linie die Bremskräfte auftreten. Entsprechend ist die tangentiale Führungsfläche 12 jene Fläche, an der der Bremspad mit seinem Innenrand anliegt. Die tangentiale Führungsfläche 12 für den Bremspad ist beim Ausführungsbeispiel zweigeteilt und wird, um Material und Gewicht zu sparen, durch eine Einsenkung 12a unterbrochen.

Die Öffnung 4 zur Aufnahme des Achskörpers einerseits und der Belagschacht 10 für den Bremspad andererseits sind geringfügig in der Weise zueinander verdreht, dass die einander gegenüberliegenden Flächen 5a, 5b der Öffnung 4 schräg, d.h. unter einem Winkel w2, zu den Führungsflächen 11 des Belagschachts 10 angeordnet sind. Der Winkel w2 beträgt zwischen 10 und 30°, vorzugsweise 20°.

Der Bremsträger 3 in seiner einstückigen Ausführung (Fign. 3 und 5) bzw. in seiner zweistückigen Ausführung (Fig. 4) ist als flache Platte mit einer Dicke von z.B. 3 cm gestaltet. Er kann z.B. als Stahlgussteil gefertigt werden, wobei sich die gewichtsreduzierenden Ausnehmungen 16a, 16b, 16c beim Gießen ergeben. Alternativ lässt sich der Bremsträger 3 durch Schmieden, oder durch Konturfräsen einer Platte und vorzugsweise einer Stahlplatte herstellen. Ebenso ist es möglich, den Bremsträger 3 aus mehreren parallel geschichteten und entsprechend dünneren Platten zusammenzusetzen. In diesem Fall lassen sich die Ausnehmungen 16a, 16b, 16c besonders einfach dadurch herstellen, dass einzelne der so geschichteten Platten an den Orten der Ausnehmungen Öffnungen aufweisen.

An den zu beiden Seiten des Belagschachts 10 angeordneten Orten A und B befinden sich die im Folgenden näher erläuterten Aufnahmeelemente für die Befestigung und gegebenenfalls Führung des die Bremsscheibe der Scheibenbremse übergreifenden Bremssattels. Die Befestigung des Bremssattels erfolgt bei dem dargestellten Ausführungsbeispiel nicht starr sondern gleitbeweglich, da die beschriebene Scheibenbremse eine Gleit- oder Schwimmsattelscheibenbremse ist. Der parallel zu dem Achskörper schwimmend an dem Bremsträger 3 gelagerte Bremssattel ist mit einer hydraulischen, pneumatischen oder elektrischen Betätigungseinrichtung zur Zustellung der Bremspads gegen die zwischen den Bremspads angeordnete Bremsscheibe versehen. Der eine Bremspad ist, wie oben bereits beschrieben, in dem Belagschacht 10 aufgenommen und darin geführt. Der andere oder auch etwaige andere Bremspads sind hingegen in einem Belagschacht des Bremssattels aufgenommen und darin geführt.

Der schwimmenden Lagerung des Bremssattels dienen Aufnahmeelemente 21, die in Gestalt von Führungszapfen an den mit A und B bezeichneten Orten an dem Bremsträger 3 befestigt sind. Hierzu können die mit einem Außengewinde 20 versehenen Aufnahmeelemente 21, auf deren zylindrischer Lagerfläche 21a der Bremssattel in Achskörper-Längsrichtung gleiten kann, in eine separate Gewindebuchse 22 eingeschraubt sein. Die Gewindebuchse 22 ihrerseits kann mittels eines leichten Presssitzes in eine Bohrung 23 des Bremsträgers 3 eingesetzt sein. Der Vorteil der zusätzlichen Gewindebuchse liegt in der einfachen Austauschbarkeit im Falle z.B. eines Verschleißes der zylindrischen Aufnahmeelemente. Es ist dann nicht erforderlich, den teuren Bremsträger zu tauschen.

Eine erste Ausführungsform für die Aufnahme des Bremssattels ist in Fig. 6 dargestellt. In der Bohrung 23 des Bremsträgers 3 sitzt die mit einem Innengewinde 24 versehene Gewindebuchse 22. Die Gewindebuchse 22 ist an ihrem einen Ende mit einem radial erweiterten Kragen 22a versehen. Mit dem Kragen 22a stützt sich die Gewindebuchse 22 gegen die Flachseite 25 des Bremsträgers 3 oder eine dortige Einsenkung ab. Von der anderen Seite her ist der in Fig. 6 gestrichelt eingezeichnete Führungszapfen 21 in das Innengewinde 24 der Gewindebuchse 22 eingeschraubt. Hierbei stützt sich der Führungszapfen 21 gegen die andere Flachseite 26 des Bremsträgers 3 oder eine dortige Einsenkung ab. Der Führungszapfen 21 stützt sich daher von der einen, und die Buchse 22 von der anderen Seite her gegen den Bremsträger 3 ab, wodurch eine einfache jedoch eindeutige Fixierung erreicht wird. Für das Einsetzen der Gewindebuchse 22 in die Bohrung 23 ist es von Vorteil, die Gewindebuchse, z.B. im Bereich des Kragens 22a, mit einem maschinell gut greifbaren Mehrkant 27 zu versehen.

Fig. 7 zeigt für die Schnittebene VII-VII der Fig. 5 eine alternative Ausführungsform der Gewindebuchse 22. Diese ist in der Flachseite 25 des Bremsträgers 3 versenkt, und mit einem 45°-Kragen 22a versehen.

Die Aufnahmeelemente nach den Fign. 6 und 7 sind jeweils so gestaltet, dass sich die Gewindebuchse 22 jeweils nur von einer Seite her in die Bohrung 23 des Bremsträgers 3 einsetzen lässt. Möglich ist jedoch auch eine Ausgestaltung mit durchgehender Bohrung 23 dergestalt, dass sich die Gewindebuchse wahlweise von der einen oder der anderen Seite her darin einsetzen lässt. Dies hat den Vorteil, dass sich ein- und derselbe Bremsträger 3 wahlweise an dem einen oder dem anderen Ende des Achskörpers 1 anschweißen lässt, da beide Bremsträger identisch gestaltet sind. Auf diese Weise lassen sich die Produktionskosten weiter senken.

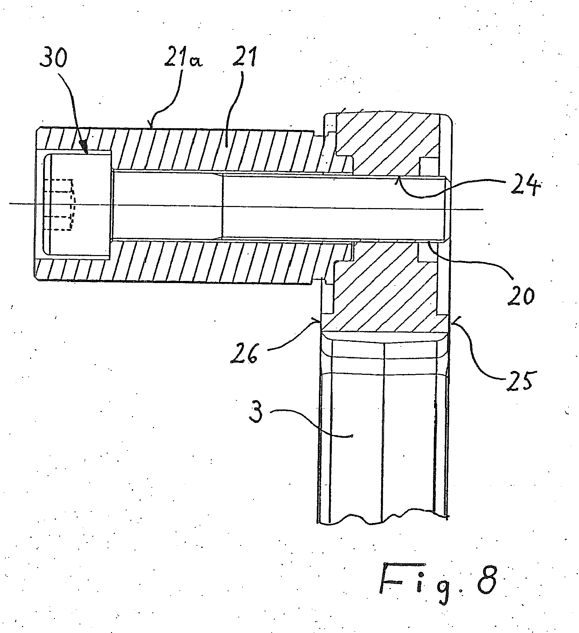

Auch die Ausführungsform nach Fig. 8 verwendet eine symmetrische Gestaltung der Bohrung 23 in dem Bremsträger 3. Auch bei dieser Ausgestaltung, welche ohne die zusätzliche Buchse auskommt, lässt sich der zylindrische Führungszapfen 21 für den Bremssattel wahlweise von der einen, oder von der anderen Seite her an den Bremsträger 3 ansetzen. Dies hat wiederum den Vorteil, dass sich ein- und derselbe Bremsträger 3 wahlweise an dem einen oder dem anderen Ende des Achskörpers 1 befestigen lässt, da beide Bremsträger identisch gestaltet sind. Die Produktionskosten lassen sich so senken. Für die Befestigung des Führungszapfens 21 ist darin eine lange Schraube 30 vorgesehen, deren Gewinde 20 in das Innengewinde 24 greift. Das Innengewinde 24 befindet sich hier unmittelbar im Material des Bremsträgers.

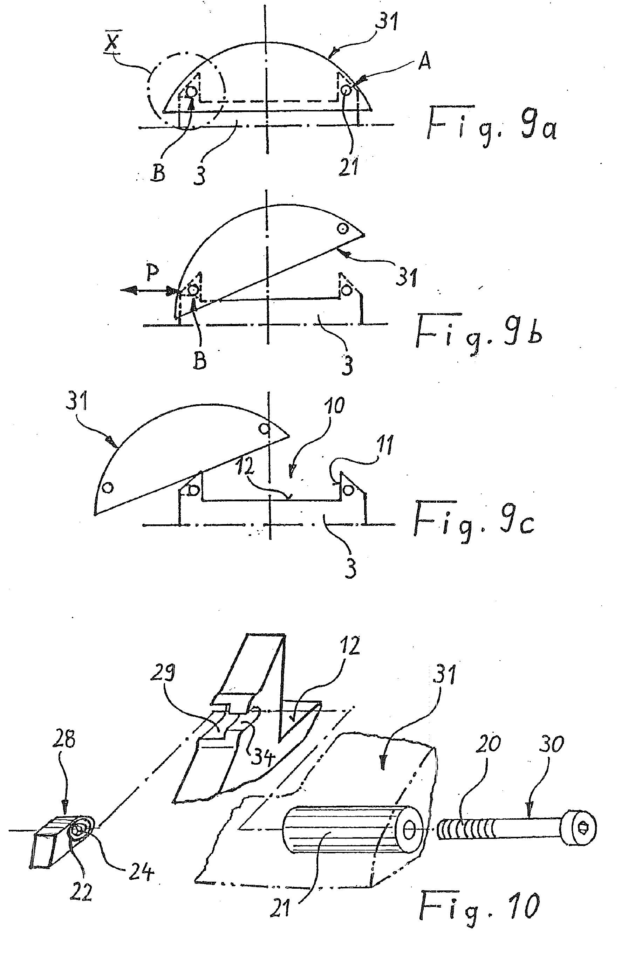

In den Fign. 9a bis 10 ist eine weitere Möglichkeit zur Befestigung des Bremssattels 31 an dem Bremsträger 3 dargestellt. Anstelle der Verwendung zweier runder Gewindebuchsen (Gewindebuchsen 22 gemäß den Fign. 6 und 7) befindet sich in dem einen Fall das Innengewinde 24 nicht in einer Buchse sondern in einem Kulissenstein 28. Dieser ist von der Seite her in eine entsprechende Kulisse 29 des Bremsträgers 3 einschiebbar. Das Einschieben bzw. Herausziehen des Kulissensteins 28 in bzw. aus der Kulisse 29 erfolgt in Richtung des Pfeils P parallel zur Erstreckung des Bremsträgers 3. In Fig. 10 ist nach Art einer Explosionsdarstellung zusätzlich der auch hier durch eine lange Schraube 30 gesicherte Führungszapfen 21 dargestellt, auf dem der Bremssattel 31 schwimmend gelagert ist. Neben der Kulisse 29 befindet sich ein Durchtritt 34 für jenen Längsabschnitt der Schraube 30, der sich zwischen dem Kulissenstein 28 und dem Führungszapfen 21 erstreckt. Der schmale Durchtritt 34 ist, ebenso wie die im Vergleich breitere Kulisse 29, zur Seite in Richtung des Pfeils P offen, und weist daher in etwa die Gestalt eines Langlochs auf. Auf diese Weise können Kulissenstein 28 und Schraube 30 in Richtung des Pfeils P nach außen aus dem Bremsträger 3 herausgeführt werden. Der Vorteil dieser konstruktiven Lösung wird nachfolgend anhand der Fign. 9a, 9b und 9c erläutert. Diese zeigen das Abnehmen des Bremssattels 31 von dem Bremsträger 3.

Zunächst wird, wie dies die Fign. 9a und 9b zeigen, das an dem Ort A angeordnete erste Aufnahmeelement des Bremssattels 31 vollständig gelöst, d.h. der dort angeordnete Führungszapfen 21 wird vollständig herausgeschraubt. Die Ausgestaltung der Gewindebuchse bei A ist vorzugsweise wie in Fig. 6 oder in Fig. 7 dargestellt.

Gemäß Fig. 9b lässt sich der Bremssattel 31 dann um B herum etwas verschwenken. Zugleich kann die noch bestehende Verbindung bei B durch das anhand der Fig. 10 beschriebene seitliche Herausschieben gelöst werden, ohne die Verschraubung bei B ganz zu entfernen. Der Bremssattel 31 ist dann vollständig frei, wie dies Fig. 9c zeigt. Bei B ist in den Kulissenstein 28 noch eine Gewindebuchse eingesetzt. Diese ist vorzugsweise wie in Fig. 6 dargestellt gestaltet. Das Anlösen der Verschraubung kann dann über den an der Gewindebuchse des Kulissensteins 28 angeformten Mehrkant (entsprechend dem Mehrkant 27 in Fig. 6) erfolgen.

Fig. 11 zeigt ein in den Belagschacht 10 des Bremsträgers 3 einsetzbares Verschleißblech 40 aus z.B. Federstahl. Das Verschleißblech 40 ist einstückig und setzt sich aus einem zentralen Stegblech 41 und zwei hierzu im wesentlichen rechtwinklig angeordneten Schenkelblechen 42 zusammen. Sowohl im Bereich des Stegblechs 41 wie auch im Bereich der Schenkelbleche 42 sind rechtwinklig nach außen abstehende Abkantungen angeformt. Hergestellt wird das Verschleißblech 40 aus einem einzigen Blechstück durch mehrfaches Abkanten. Zur Erzielung einer gewissen Vorspannung kann es vorteilhaft sein, wenn die beiden Schenkelbleche 42 nicht exakt parallel zueinander verlaufen, sondern sich nach außen hin geringfügig voneinander entfernen. Beim Einsetzen des Verschleißbleches 40 in den Belagschacht 10 des Bremsträgers 3 legen sich die Schenkelbleche 42 dann unter geringer Federwirkung an die entsprechenden Innenflächen des Belagschachts. Die Innenflächen des Verschleißblechs 40 sind glattflächig und bilden auf diese Weise reibungsarme radiale und tangentiale Abstütz- und Führungsflächen 11, 12 für den darin eingesetzten Bremspad. Hierbei stützen sich die Abkantungen 43 von außen gegen die entsprechenden Flachseiten 25, 26 des Bremsträgers 3 ab, so dass sie Mittel darstellen, um das Verschleißblech 40 in dem Belagschacht 10 zu fixieren, wodurch das Verschleißblech darin nicht verrutschen kann.

Statt eines einzigen Verschleißbleches können auch zwei Verschleißbleche in Form jeweils eines Winkels verwendet werden. Fig. 12 zeigt zwei solche, in die Winkel des Belagschachts 10 einsetzbare Verschleißbleche 40a.

An dem Verschleißblech 40 können Vorsprünge angeformt sein, welche in korrespondierend gestaltete Aussparungen in der Umfangskontur des Bremspads hineinpassen. Dadurch lässt sich das Einsetzen eines für die Bremse nicht bestimmten Bremspads oder eines richtigen Bremspads jedoch in falscher Einbaulage in den Belagschacht verhindern. Einzelheiten zu einer solcherart Kodierung der Bremspads sind ausführlich in der europäischen Patentanmeldung EP 1 473 481 A1 beschrieben.

Von Vorteil sind die beschriebenen Verschleißbleche, da im Falle des sich mit der Zeit einstellenden Verschleißes der Führungsflächen des Belagschachts 10 nicht der komplette Bremsträger 3, an dem der Belagschacht ausgebildet ist, getauscht werden muss. Vielmehr reicht es aus, die Verschleißbleche 40, 40a auszutauschen. Dies kann im Rahmen der regelmäßigen Wartungsarbeiten an der Scheibenbremse erfolgen, z.B. bei jedem dritten Wechsel der Bremspads.

**Bezugszeichen**

| | | | |
|---|---|---|---|
| 1 | Achskörper | 40a | Verschleißblech |
| 1a | Achsschenkel | 41 | Stegblech |
| 2 | Schweißnaht | 42 | Schenkelblech |
| 3 | Bremsträger | 43 | Abkantung |
| 3a | Bremsträgerteil | | |
| 3b | Bremsträgerteil | A | Befestigungsort |
| 4 | Öffnung | B | Befestigungsort |
| | | P | Pfeil |
| 5a | Fläche | w1 | Umschließungswinkel |
| 5b | Fläche | w2 | Winkel |
| 5c | Fläche | | |
| 6 | Mittelachse | | |
| 10 | Belagschacht | | |
| 11 | (radiale) Führungsfläche | | |
| 12 | (tangentiale) Führungsfläche | | |
| 12a | Einsenkung | | |
| 16a | Ausnehmung | | |
| 16b | Ausnehmung | | |
| 16c | Ausnehmung | | |
| 20 | Gewinde | | |
| 21 | Führungszapfen, Aufnahmeelement | | |
| 21a | Lagerfläche | | |
| 22 | Gewindebuchse | | |
| 22a | Kragen | | |
| 23 | Bohrung | | |
| 24 | Gewinde | | |
| 25 | Flachseite des Bremsträgers | | |
| 26 | Flachseite des Bremsträgers | | |
| 27 | Mehrkant | | |
| 28 | Kulissenstein | | |
| 29 | Kulisse | | |
| 30 | Schraube | | |
| 31 | Bremssattel | | |
| 34 | Durchtritt | | |
| 40 | Verschleißblech | | |

## Patentansprüche

1. Verschleißblech zum austauschbaren Einsetzen in einen Belagschacht (10) eines zur Befestigung eines Bremssattels dienenden Bremsträgers einer Scheibenbremse, mit an einem zentralen Stegblech (41) und zwei hierzu im Wesentlichen rechtwinklig angeordneten Schenkelblechen (42) ausgebildeten, glattflächigen Innenflächen, die reibungsarme tangentiale (12) und radiale (11) Abstütz- und Führungsflächen für einen in dem Belagschacht (10) einsetzbaren Bremspad der Scheibenbremse bereitstellen, wobei an dem Stegblech (41) und an den zwei Schenkelblechen (42) Mittel (43) zum Fixieren des Verschleißblechs (40) an dem Belagschacht (10) angeformt sind, und die Mittel (43) die Gestalt von sich bis über Flachseiten (25, 26) des Bremsträgers erstreckenden Abkantungen (43) aufweisen.

2. Verschleißblech zum austauschbaren Einsetzen in einen Belagschacht (10) eines zur Befestigung eines Bremssattels dienenden Bremsträgers einer Scheibenbremse, bestehend aus zwei einzelnen Verschleißblechen (40a) mit jeweils an einem Stegblech (41) und einem hierzu im Wesentlichen rechtwinklig angeordneten Schenkelblech (42) ausgebildeten, glattflächigen Innenflächen, die reibungsarme tangentiale (12) und radiale (11) Abstütz- und Führungsflächen für einen in den Belagschacht (10) einsetzbaren Bremspad der Scheibenbremse bereitstellen, wobei bei jedem der einzelnen Verschleißbleche (40a) an dem Stegblech (41) und an dem Schenkelblech (42) Mittel (43) zum Fixieren des jeweiligen Verschleißblechs (40a) an dem Belagschacht (10) angeformt sind, und die Mittel (43) die Gestalt von sich bis über Flachseiten (25, 26) des Bremsträgers erstreckenden Abkantungen (43) aufweisen.

3. Verschleißblech nach Anspruch 1 oder 2, **gekennzeichnet durch** einen daran angeformten Vorsprung, welcher in eine zu dem Vorsprung korrespondierende Aussparung in der Umfangskontur des Bremspads eingreift.
